# FASCICULE DE BREVET EUROPEEN

(11) **EP 1 161 074 B1**
(45) Date de publication et mention de la délivrance du brevet: **02.08.2006**
(21) Numéro de dépôt: 01401400.5
(22) Date de dépôt: 29.05.2001
(51) Int. Cl.: H04M 19/00, H04M 19/08, H04Q 11/04

(54) **Procédé de sécurisation d'une liaison téléphonique**
Verfahren zur sicherung einer telefonverbindung
Method for securing a telephone connection

(30) Priorité: 30.05.2000 FR 0006902
(43) Date de publication de la demande: 05.12.2001
(73) Titulaire: Sagem Communication, 75015 Paris (FR)
(72) Inventeur: Dalle, Eric, 94270 Le Kremlin Bicetre (FR)
(74) Mandataire: Fruchard, Guy

(56) Documents cités:
- GB-A- 2 313 979
- US-A- 5 418 776
- US-A- 5 883 941

## Description

La présente invention concerne un procédé de sécurisation d'une liaison téléphonique.

On sait que les nouvelles techniques de transmission numérique permettent à un abonné qui dispose d'un raccordement téléphonique sous forme d'une ligne, de pouvoir transmettre des données à débit élevé tout en conservant un accès téléphonique classique grâce à un multiplexage voix/données effectué sur la ligne.

D'une façon générale, les équipements utilisateurs raccordés à une ligne téléphonique sont normalement téléalimentés par le central de façon à offrir un service téléphonique permanent même en cas de défaillance du réseau électrique chez l'utilisateur.

Toutefois la complexité des dispositifs de raccordement téléphonique permettant la transmission de données à débit élevé entraîne une demande de puissance supérieure à celle qui est offerte par la téléalimentation. Il est donc nécessaire de prévoir une alimentation locale des dispositifs de raccordement téléphonique aptes à transmettre des données à débit élevé. Parallèlement, la téléalimentation est supprimée de sorte que dans le cas d'une défaillance de l'alimentation locale le dispositif de raccordement téléphonique ne reçoit aucune alimentation et n'assure donc ni la transmission des données à débit élevé ni même la transmission des signaux téléphoniques proprement dits.

Il est connu, notamment du document GB 2 313 979, un procédé de sécurisation d'une liaison téléphonique dans un dispositif de raccordement téléphonique comportant une borne de ligne, une borne de liaison téléphonique et une borne de liaison à haut débit reliées à une unité de traitement associée à un organe d'alimentation locale et comprenant une interface ligne, une interface téléphonique et une interface haut débit respectivement reliées aux bornes correspondantes et associées à un microprocesseur, le procédé comportant les étapes de détecter un état de fonctionnement de l'organe d'alimentation locale, de commander une connexion/déconnexion de l'interface haut débit et une activation/désactivation du microprocesseur en fonction de l'état de fonctionnement de l'organe d'alimentation locale, et d'établir une télé-alimentation de la borne de liaison téléphonique lors d'une défaillance de l'organe d'alimentation locale.

Dans le procédé décrit dans ce document, la reconnexion de l'interface haut débit lors d'un rétablissement de l'alimentation locale s'effectue sans aucun contrôle de la liaison téléphonique. Dans le cas où une communication téléphonique est en cours, il existe un risque de perturbation, voire d'interruption de la communication téléphonique.

Selon l'invention on propose un procédé du type mentionné ci-dessus, caractérisé en ce que lors de la déconnexion de l'organe de traitement à haut débit le procédé comporte l'étape de détecter un état raccroché/décroché d'un poste téléphonique relié à la borne de liaison téléphonique et assurer une reconnexion de la partie de traitement à haut débit seulement lorsque le poste téléphonique est dans un état raccroché. On évite ainsi tout risque de perturbation d'une communication en cours lors de la reconnexion de l'organe de traitement à haut débit.

Selon une version avantageuse de l'invention la détection de la défaillance de l'organe d'alimentation locale est effectuée par analyse de messages émis par l'unité de traitement. Plus particulièrement, les messages analysés sont relatifs à la validité d'une trame émise par la partie de traitement à haut débit. On utilise ainsi le fonctionnement normal de l'unité de traitement pour détecter la défaillance de l'organe d'alimentation locale.

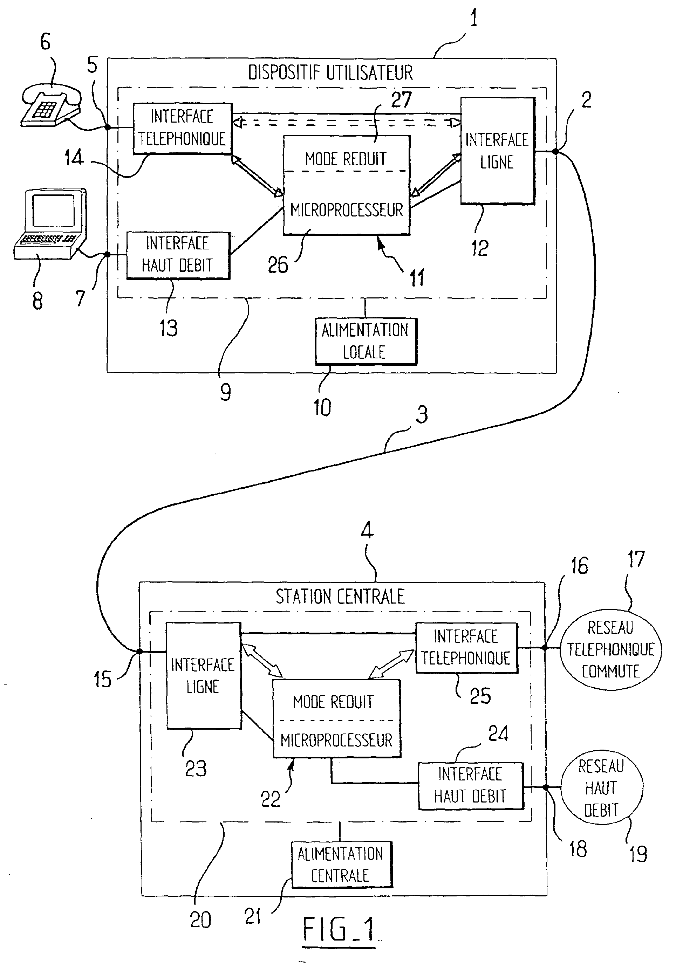

D'autres caractéristiques et avantages de l'invention apparaîtront à la lecture de la description qui suit d'un mode de mise en oeuvre particulier non limitatif du procédé selon l'invention en relation avec la figure unique ci-jointe qui est une représentation schématique d'un dispositif de raccordement utilisateur relié à un équipement de raccordement d'une station centrale pour mettre en oeuvre le procédé de sécurisation selon l'invention.

En référence à la figure, le dispositif de raccordement utilisateur 1 comporte de façon connue en soi une borne de ligne 2 à laquelle est reliée une ligne 3 assurant avec un équipement 4 d'une station centrale une liaison mixte, c'est-à-dire une liaison téléphonique classique pour les signaux de voix ou de données à faible débit et une liaison à haut débit pour la transmission de données. De façon également connue en soi, le dispositif de raccordement 1 comprend une borne de liaison téléphonique 5 à laquelle est raccordé un poste téléphonique 6 et une borne de liaison à haut débit 7 à laquelle est relié un équipement informatique 8. La borne de ligne 2, la borne de liaison téléphonique 5 et la borne de liaison à haut débit 7 sont reliées à une unité de traitement 9 associée à une alimentation locale 10 reliée au réseau électrique non représenté. L'unité de traitement 9 comporte un microprocesseur de traitement à haut débit 11 relié à une interface de ligne 12 elle-même connectée à la borne de ligne 2, et à une interface haut débit 13 elle-même reliée à la borne de liaison à haut débit 7. Par ailleurs, l'interface de ligne 12 est reliée à une interface téléphonique 14 reliée à la borne de liaison téléphonique 5.

L'équipement de raccordement 4 de la station centrale comporte une borne de ligne 15 à laquelle est raccordée la ligne 3, une borne de liaison téléphonique 16 reliée à un réseau téléphonique commuté 17 et une borne de liaison à haut débit 18 reliée à un réseau à haut débit 19.

Les différentes bornes sont reliées à une unité de traitement 20 associée à un organe d'alimentation centrale 21. Selon le mode de réalisation illustré, l'unité de traitement 20 comporte un microprocesseur de traitement à haut débit 22 relié à une interface de ligne 23 elle-même reliée à la borne de ligne 15 et à une interface haut débit 24 elle-même reliée à la borne de liaison haut débit 18. L'interface de ligne 23 est en outre reliée à une interface téléphonique 25 reliée à la borne de liaison téléphonique 16.

En fonctionnement normal, les unités de traitement 9 et 20 sont convenablement alimentées et sont donc reliées l'une à l'autre par la ligne 3. L'équipement 4 de la station centrale comme le dispositif de raccordement utilisateur 1 remplissent alors leur fonction de transmission de signaux téléphoniques conventionnels et de signaux de données à haut débit. Dans ce fonctionnement normal les unités de traitement 9 et 20 échangent des signaux de synchronisation périodiques permettant d'effectuer la transmission. La liaison entre les interfaces ligne et les interfaces téléphoniques est effectuée sous le contrôle du microprocesseur correspondant comme symbolisé par des flèches doubles en traits continus.

Si l'alimentation locale 10 devient défaillante, l'unité de traitement 9 n'est plus alimentée et le microprocesseur 11 émet de façon connue en soi un signal informant l'unité de traitement 20 de la dernière trame à haut débit valablement émise par l'unité de traitement 9. Le microprocesseur 22 commande alors l'interface téléphonique 25 et l'interface ligne 23 pour activer un mode de télé-alimentation et envoie au microprocesseur 11 un signal de commande assurant une désactivation, ou une déconnexion, d'une partie de traitement à haut débit 26 du microprocesseur ainsi que l'interface haut débit 13. Selon l'invention le contrôle de l'interface téléphonique 14 est alors assuré par l'interface ligne 12 comme illustré par la flèche double en tirets sur la figure. Le microprocesseur 11 est alors complètement désactivé. Seule une partie de fonctionnement en mode réduit 27 reste en service afin de permettre une remise en service de la partie de traitement à haut débit 26 et de l'interface haut débit 13 en fonction d'une commande reçue de l'interface de ligne 12. A cet effet, l'interface de ligne 12 assure la gestion de la connexion/déconnexion de la partie de traitement à haut débit 26. La consommation de l'unité de traitement est alors réduite à un niveau très faible pouvant être satisfait par la télé-alimentation. La télé-alimentation qui est fournie par le réseau téléphonique commuté 17 est alors transmise au dispositif de raccordement utilisateur 1 en même temps que les signaux téléphoniques conventionnels. La détection de la dernière trame valide et le rétablissement du mode de télé-alimentation peuvent être effectués de façon suffisamment rapide pour que le réseau téléphonique commuté ne détecte pas de coupure de ligne de sorte que l'abonné du poste téléphonique 6 peut continuer la conversation téléphonique en cours sans avoir à recomposer le numéro de son correspondant.

Si l'alimentation locale 10 est remise en service alors qu'une communication téléphonique est en cours, la partie 27 fonctionnant en mode réduit est informée par l'interface téléphonique 14 de l'état décroché du poste téléphonique 6 et maintient le microprocesseur 11 en mode réduit tant que la communication est en cours. Parallèlement, la partie 27 commande l'émission de signaux de synchronisation vers l'unité de traitement 20 afin de préparer un retour en fonctionnement normal des unités de raccordement.

Si une nouvelle interruption de l'alimentation locale 10 survient, l'unité de traitement 20 en est informée et l'ensemble des connexions est maintenu dans un état de sécurisation téléphonique. Si au contraire, l'alimentation locale 10 est en service lorsque l'appareil téléphonique 6 est raccroché, l'interface téléphonique 14 envoie un signal permettant la reconnexion de la partie 26 du microprocesseur 11 par réactivation de celle-ci. L'unité de traitement 20 est informée de cette situation et procède à la désactivation de la télé-alimentation et à la reprise de la transmission des données en mode haut débit.

Dans le cas d'une interruption du côté de la station centrale, que celle-ci résulte d'une défaillance de l'alimentation centrale 21 ou d'une opération de maintenance volontaire dans l'équipement 4 de la station centrale, le microprocesseur 22 de l'unité de traitement 20 et l'interface haut débit 24 sont basculés en mode réduit avec activation simultanée de la télé-alimentation. L'interface ligne 12 du dispositif de raccordement utilisateur 1 informe le microprocesseur 11 qui bascule à son tour en mode réduit. Lors du retour au fonctionnement normal de l'équipement 4 de la station centrale, une communication est établie entre l'unité de traitement 20 et l'unité de traitement 9 pour un retour au fonctionnement normal qui est géré comme dans le cas d'une défaillance d'alimentation du dispositif de raccordement utilisateur.

Bien entendu l'invention n'est pas limitée au mode de mise en oeuvre décrit ci-dessus et on peut y apporter des variantes de réalisation sans sortir du cadre de l'invention telle que définie par les revendications.

En particulier, en remplacement de la détection de la dernière trame à haut débit valide lors d'une interruption de l'alimentation locale 10 on peut prévoir l'émission d'un message de télémaintenance. Dans ce cas, il est nécessaire de prévoir dans le dispositif de raccordement utilisateur ainsi que dans l'équipement 4 de la station centrale une batterie de secours permettant d'alimenter les circuits d'élaboration et d'envoi du message de télémaintenance.

## Revendications

1. Procédé de sécurisation d'une liaison téléphonique dans un dispositif de raccordement téléphonique comportant une borne de ligne (2), une borne de liaison téléphonique (5) et une borne de liaison à haut débit (7) reliées à une unité de traitement (9) associée à un organe d'alimentation locale et comprenant une interface ligne (12), une interface téléphonique (14) et une interface haut débit (13) respectivement reliées aux bornes correspondantes et associées à un microprocesseur (11), le procédé comportant les étapes de détecter un état de fonctionnement de l'organe d'alimentation locale (10), de commander une connexion/déconnexion de l'interface haut débit (13), et une activation/désactivation d'une partie de traitement à haut débit du microprocesseur (11) en fonction de l'état de fonctionnement de l'organe d'alimentation locale (10), et d'établir une télé-alimentation de la borne de liaison téléphonique (5) lors d'une défaillance de l'organe d'alimentation locale (10), **caractérisé en ce que**, lors de la déconnexion de la partie de traitement à haut débit (26) le procédé comporte l'étape de détecter un état raccroché/décroché d'un poste téléphonique (6) relié à la borne de liaison téléphonique (5) et assurer une reconnexion de la partie de traitement à haut débit (26) seulement lorsque le poste téléphonique (6) est dans un état raccroché.

2. Procédé selon la revendication 1, **caractérisé en ce que** la détection de la défaillance de l'organe d'alimentation locale (10) est effectuée par analyse de messages émis par la partie de traitement à haut débit (26)

3. Procédé selon la revendication 2, **caractérisé en ce que** les messages analysés sont relatifs à la validité d'une trame émise par la partie de traitement à haut débit (26).

## Claims

1. A method of making a telephone link dependable in a telephone connection device comprising a line terminal (2), a telephone connection terminal (5), and a broadband connection terminal (7) connected to a processor unit (9) associated with a local power supply member and including a line interface (12), a telephone interface (14), and a broadband interface (13) respectively connected to the corresponding terminals and associated with a microprocessor (11), the method comprising the steps of detecting an operating state of the local power supply member (10), of controlling connection/disconnection of the broadband interface (13), and activation/deactivation of a broadband processing portion of the microprocessor (11) a s a function of the operating state of the local power supply member (10), and of establishing line-powering of the telephone connection terminal (5) in the event of a failure of the local power supply member (10), the method being **characterized in that** on disconnection of the broadband processing portion (26), the method includes the step of detecting an on-hook/off-hook state of a telephone set (6) connected to the telephone connection terminal (5), and of ensuring reconnection of the broadband processing portion (26) only when the telephone set (6) is in an on-hook state.

2. A method according to claim 1, **characterized in that** failure of the local power supply member (10) is detected by analyzing messages issued by the broadband processing portion (26).

3. A method according to claim 2, **characterized in that** the analyzed messages relate to the validity of a frame issued by the broadband processing portion (26).

## Patentansprüche

1. Verfahren zur Sicherung einer Telefonverbindung in einer Telefonanschlussvorrichtung, umfassend einen Leitungsanschluss (2), einen Telefonverbindungsanschluss (5) und einen Hochgeschwindigkeitsverbindungsanschluss (7), die mit einer an eine lokale Versorgungseinheit angeschlossenen Verarbeitungseinheit (9) verbunden sind, wobei letztere eine Leitungsschnittstelle (12), eine Telefonschnittstelle (14) und eine Hochgeschwindigkeitschnittstelle (13) umfasst, die jeweils mit den entsprechenden Anschlüssen verbunden und an einen Mikroprozessor (11) angeschlossen sind, wobei das Verfahren die Schritte umfasst Erfassen eines Funktionszustands der lokalen Versorgungseinheit (10), Steuern einer Verbindung/ Trennung der Hochgeschwindigkeitsschnittstelle (13) und Aktivierung/ Deaktivierung eines Hochgeschwindigkeitsverarbeitungsabschnitts des Mikroprozessors (11) in Abhängigkeit vom Funktionszustand der lokalen Versorgungseinheit (10), und
Herstellen einer Fernversorgung des Telefonverbindungsanschlusses (5) bei einem Ausfall der lokalen Versorgungseinheit (10),
**dadurch gekennzeichnet, dass** das Verfahren bei der Trennung des Hochgeschwindigkeitsverarbeitungsabschnitts (26) den Schritt umfasst, einen Zustand aufgelegt/ abgenommen eines mit dem Telefonverbindungsanschluss (5) verbundenen Telefons (6) zu erfassen und eine Wiederverbindung des Hochgeschwindigkeitsverarbeitungsabschnitts (26) sicherzustellen, nur wenn das Telefon (6) in einem aufgelegten Zustand ist.

2. Verfahren nach Anspruch 1, **dadurch gekennzeichnet, dass** das Erfassen des Ausfalls der lokalen Versorgungseinheit (10) durch eine Analyse von Meldungen durchgeführt wird, die vom Hochgeschwindigkeitsverarbeitungsabschnitt (26) ausgesendet werden.

3. Verfahren nach Anspruch 2, **dadurch gekennzeichnet, dass** die analysierten Meldungen auf die Gültigkeit eines Rahmens bezogen sind, der vom Hochgeschwindigkeitsverarbeitungsabschnitt (26) ausgesendet wird.
